# EUROPÄISCHE PATENTSCHRIFT

(11) **EP 4 012 217 B1**
(45) Veröffentlichungstag und Bekanntmachung des Hinweises auf die Patenterteilung: **16.04.2025**
(21) Anmeldenummer: 21204381.4
(22) Anmeldetag: 25.10.2021
(51) Int. Cl.: F16F 7/108, G10K 11/172, F16F 15/00, F16F 7/104

(54) **RESONANZABSORBER**
RESONANCE ABSORBER
DISPOSITIF D'ABSORPTION PAR RÉSONANCE

(30) Priorität: 14.12.2020 DE 102020215804
(43) Veröffentlichungstag der Anmeldung: 15.06.2022
(73) Patentinhaber: ContiTech Vibration Control GmbH, 30175 Hannover (DE)
(72) Erfinder: Werhahn, Max, 30419 Hannover (DE); Marienfeld, Peter, 30419 Hannover (DE); Kuehne, Lukas, 30419 Hannover (DE)
(74) Vertreter: Continental Corporation

(56) Entgegenhaltungen:
- EP-A1- 1 927 782
- DE-A1- 10 321 436
- DE-A1- 2 163 798
- US-A1- 2014 008 162

## Beschreibung

Die vorliegende Erfindung betrifft einen Resonanzabsorber gemäß dem Oberbegriff des Patentanspruchs 1 sowie eine schwingungsfähige Vorrichtung mit wenigstens einem derartigen Resonanzabsorber gemäß dem Patentanspruch 15.

Auf verschiedensten technischen Gebieten ist das Auftreten von Schwingungen, insbesondere von Resonanzschwingungen, unerwünscht, da derartige Schwingungen zu zusätzlichen Belastungen der mechanischen Elemente, zur Entstehung von Luftschall in Form von Geräuschen und dergleichen führen können.

Zur Verringerung der Übertragung von hochfrequentem Körperschall wird im Allgemeinen auf die Isolation durch elastische dämpfungsarme Strukturen wie zum Beispiel auf Gummi, d. h. auf vulkanisierten Kautschuk, gesetzt.

Nachteilig hierbei ist, dass die Schwingungsisolation mithilfe von Gummi durch die dynamische Verhärtung von Gummi beschränkt ist, welche bei steigender Frequenz zunimmt. Zudem können im höheren Frequenzbereich Eigenschwingungen im Gummi auftreten, welche das Übertragungsverhalten in einzelnen Frequenzbereichen stark verschlechtern können. Störender Körperschall zum Beispiel von Elektromotoren kann somit nicht im gesamten Spektrum isoliert werden und zu störenden Schwingungsphänomenen führen, welche sich zum Beispiel akustisch als Luftschall wie zum Beispiel als ein Pfeifen im Fahrgastraum von E-Fahrzeugen (Elektro-Fahrzeugen) äußern können.

Auch werden üblicherweise für störende Resonanzerscheinungen in einzelnen Frequenzbereichen passive Tilger zur Schwingungsreduktion eingesetzt, welche gezielt auf den zu dämpfenden Frequenzbereich konstruktiv abgestimmt sind.

Nachteilig bei passiven Tilgern ist, dass passive Tilger lediglich die zusätzliche Überhöhung einzelner Schwingungsphänomenen aufgrund von zum Beispiel Strukturresonanzen unterdrücken können. Dazu ist jedoch je nach Struktur eine Vielzahl von passiven Tilgern nötig, welche lediglich in einzelnen Frequenzbereichen eine Wirkung zeigen können. Zudem kann sich das Verhalten der passiven Tilger zum Beispiel durch Alterung und bzw. oder durch Temperaturschwankungen verändern, was zu einer Reduktion der Wirksamkeit der passiven Tilger führen kann.

Die DE 21 63 798 A1 beschreibt einen Resonanzabsorber zur Dämpfung von periodischen und bzw. oder aperiodischen, mechanischen Schwingungen mittels mechanischer Schwingelemente. Durch geeignete Ausgestaltung der Schwingelemente sind die Abstände ihrer Eigenfrequenz verkleinert, so dass möglichst viele Eigenfrequenzen in den zu dämpfenden Frequenzbereich zu liegen kommen.

Weiterhin können allgemein Schwingungen breitbandig mithilfe eines aktiven Tilgers reduziert bzw. kompensiert werden, indem eine Inertialmasse beschleunigt wird. Durch die Frequenz der Beschleunigung kann die dämpfende Wirkung der Inertialmasse auf die zu dämpfende Frequenz gesteuert abgestimmt werden.

Durch den Einsatz eines aktiven Tilgers kann die Körperschallübertragung prinzipiell breitbandig und dauerhaft unterdrückt werden. Dazu sind jedoch Aktoren mit relativ großen Kräften und Stellwegen erforderlich, um im gesamten Frequenzbereich die benötigte Beschleunigung der Inertialmasse hervorzurufen, was in einer teuren und großen Aktuatorik resultieren kann.

Kombiniert man darüber hinaus einen aktiven Tilger mit einem Resonanzverstärker als passivem Tilger, gegebenenfalls mit mehreren Resonanzverstärkern, so kann zwar eine deutlich gesteigerte Tilgungswirkung bei der jeweiligen Resonanzfrequenz erreicht werden. In den Übergangsbereichen zwischen den einzelnen Resonanzen kann jedoch nur schlecht bis gar nicht kompensiert werden. Derartig kombinierte Systeme sind daher lediglich für Schwingungsprobleme mit diskreten zu dämpfenden Frequenzlagen geeignet.

Die DE 103 21 436 A1 beschreibt eine Vorrichtung mit einem piezoelektrischen Wandler, welcher an einem feststehenden vertikalen Tragelement angeordnet ist. Zwei schwingungsfähige Massen sind einander diametral gegenüberliegend über den piezoelektrischen Wandler radial miteinander verbunden. Weiterhin sind die beiden schwingungsfähigen Massen mittels jeweils zweier federelastischer Elemente schräg radial mit demselben Tragelement verbunden. Durch eine Ansteuerung des piezoelektrischen Wandlers entsteht eine radiale Auslenkung des piezoelektrischen Wandlers. Die Massen schwingen aufgrund der federelastischen Elemente überwiegend quer dazu nach oben und unten. Die Massen haben also eine Schwingungskomponenten in Längsrichtung des piezoelektrischen Wandlers sowie eine ausgeprägte Schwingungskomponenten senkrecht dazu.

Eine Aufgabe der vorliegenden Erfindung ist es, einen Resonanzabsorber der eingangs beschriebenen Art bereit zu stellen, welcher nicht nur bei diskreten Frequenzen bzw. Frequenzbereichen dämpfend wirken kann. Mit anderen Worten soll ein Resonanzabsorber der eingangs beschriebenen Art geschaffen werden, welche über einen vergleichsweise großen Frequenzbereich dämpfend wirken kann. Dies soll insbesondere mit einem vergleichsweise geringen Bedarf an Kraft und bzw. oder an Stellweg erreicht werden können. Dies soll insbesondere vergleichsweise einfach, kompakt, leicht, kostengünstig und bzw. oder langlebig umgesetzt werden können. Zumindest soll eine Alternative zu bekannten Resonanzabsorbern geschaffen werden.

Die Aufgabe wird erfindungsgemäß durch einen Resonanzabsorber mit den Merkmalen gemäß Patentanspruch 1 sowie durch eine schwingungsfähige Vorrichtung mit den Merkmalen gemäß Patentanspruch 15 gelöst. Vorteilhafte Weiterbildungen sind in den Unteransprüchen beschrieben.

Somit betrifft die vorliegende Erfindung einen Resonanzabsorber mit wenigstens einer Resonanzstruktur als passivem Tilger mit einer Mehrzahl von Schwingelementen, welche um eine gemeinsame Längsachse herum sich zumindest abschnittsweise, vorzugsweise im Wesentlichen, besonders vorzugsweise vollständig, radial erstreckend ausgebildet sind, wobei die Schwingelemente in der Umfangsrichtung der Längsachse zumindest abschnittsweise durch Abstände zueinander beabstandet sind. Die Schwingelemente können dabei auch als Stege bezeichnet werden. Der Resonanzabsorber stellt einen resonanzverstärkten aktiven Tilger dar, da er durch seine eigenen Resonanzen die Tilgung verstärken kann.

Der erfindungsgemäße Resonanzabsorber ist gekennzeichnet durch wenigstens ein Anregungselement als aktivem Tilger, welches ausgebildet ist, die Schwingelemente der Resonanzstruktur gemeinsam entlang der Längsachse zu Schwingungen anzuregen, wobei zumindest mehrere in der Umfangsrichtung unmittelbar benachbarte Schwingelemente, vorzugsweise alle Schwingelemente, über den jeweiligen Abstand hinweg elastisch miteinander schwingungsübertragend gekoppelt sind. Als Anregungselement können jegliche geeignete Arten von Antrieben verwendet werden. Insbesondere können elektrodynamische oder elektromagnetische Aktoren verwendet werden.

Mit anderen Worten wird ein passiver Resonanzabsorber wie beispielsweise aus der DE 21 63 798 A1 bekannt um ein Anregungselement als aktive Tilger weitergebildet und darüber hinaus dessen in der Umfangsrichtung unmittelbar benachbarten Schwingelemente derart miteinander verbunden, dass die Schwingung eines Schwingelements mittels der Kopplung auf wenigstens ein unmittelbar benachbartes Schwingelement übertragen werden, sodass dieses ebenfalls zu einer Schwingung angeregt wird. Dies kann lediglich für einen Teil der Schwingelemente und vorzugsweise für alle Schwingelemente erfolgen.

Der vorliegenden Erfindung liegt dabei die Erkenntnis zugrunde, dass bei bekannten Resonanzabsorbern lediglich diskrete Frequenzen bzw. schmalbandige Frequenzbereiche durch die Schwingungen eines einzelnen Schwingelements bei Resonanz gedämpft werden können. Hierdurch entstehen Lücken im Frequenzbereich, welche von keinem der Schwingelemente gedämpft werden können. Dies gilt für passive Tilger ebenso wie für aktive Tilger.

Erfindungsgemäß werden daher unmittelbar benachbarte Schwingelemente elastisch miteinander verbunden und hierdurch schwingungsübertragend miteinander gekoppelt, sodass eine Kopplung der Eigenformen der miteinander verbundenen Schwingelemente erreicht werden kann. Hierdurch kann auch im Frequenzbereich zwischen den Resonanzfrequenzen der beiden miteinander verbundenen Schwingelemente eine Überhöhung der Anregung erreicht werden. Entsprechend breitbandig bzw. lückenlos kann mittels des Anregungselements eine Dämpfung bewirkt werden.

Gemäß einem Aspekt der Erfindung ist der jeweilige Abstand zwischen den Schwingelementen zumindest abschnittsweise, vorzugsweise vollständig, mit einem elastischen Material gefüllt, welches die unmittelbar benachbarten Schwingelemente schwingungsübertragend miteinander koppelt. Dies kann eine einfache aber wirkungsvolle Art und Weise darstellen, die zuvor beschriebene Kopplung zwischen unmittelbar benachbarten Schwingelementen zu erreichen.

Hierzu können lediglich die Abstände zwischen den Schwingelementen vom elastischen Material teilweise bis vollständig gefüllt sein. Die teilweise Füllung der Abstände zwischen den Schwingelementen mit elastischem Material kann sich entlang der Längsachse und bzw. oder radial erstrecken.

Die Schwingelemente können darüber hinaus auch teilweise oder vollständig von dem elastischen Material überzogen sein, sodass zusätzlich zur schwingungsübertragenden Kopplung eine Ummantelung der Schwingelemente erreicht werden kann, um diese gegenüber äußeren Einflüssen wie zum Beispiel Feuchtigkeit zu schützen.

Gemäß einem weiteren Aspekt der Erfindung weist, vorzugsweise ist, das elastische Material ein elastomeres Material, vorzugsweise Gummi, oder ein thermoplastisches Material auf. Hierdurch können die entsprechenden Materialeigenschaften zur Umsetzung der vorliegenden Erfindung genutzt werden.

Gemäß einem weiteren Aspekt der Erfindung ist der jeweilige Abstand zwischen den Schwingelementen abschnittsweise mit einer dünneren Materialstärke des Materials der Schwingelemente als Materialschwächung gefüllt, welche die unmittelbar benachbarten Schwingelemente schwingungsübertragend miteinander koppelt. Alternativ oder zusätzlich zu der zuvor beschriebenen schwingungsübertragenden Kopplung mittels eines elastischen Materials können somit die unmittelbar benachbarten Schwingelemente auch einstückig, d. h. integral, ausgebildet sein, wobei die eigentlichen Schwingelemente durch dünnere Materialbereiche miteinander schwingungsübertragend verbunden sind, welche als Materialschwächung bezeichnet werden können. Die Materialschwächung ist dabei derartig dünnwandig ausgebildet, sodass eine elastische Schwingungsübertragung wie zuvor beschrieben erfolgen kann. Auch hierdurch kann eine schwingungsübertragende Kopplung wie zuvor beschrieben umgesetzt werden.

Gemäß einem weiteren Aspekt der Erfindung sind die unmittelbar benachbarten Schwingelemente mittels wenigstens eines Verbindungselements schwingungsübertragend miteinander gekoppelt. Alternativ oder zusätzlich zu den zuvor beschriebenen Möglichkeiten der schwingungsübertragenden Kopplung können somit auch zusätzliche elastische Elemente verwendet werden, um eine schwingungsübertragende Kopplung zu realisieren. Derartige Verbindungselemente können insbesondere oberhalb und bzw. oder unterhalb der Schwingelemente angeordnet sein was den konstruktiven Aufwand der Umsetzung geringhalten kann.

Gemäß einem weiteren Aspekt der Erfindung weist, vorzugsweise ist, die Schwingelemente, vorzugsweise samt Materialschwächung, ein metallisches Material oder ein duroplastisches Material auf. Hierdurch könnend die entsprechenden Materialeigenschaften zur Umsetzung der vorliegenden Erfindung genutzt werden.

Gemäß einem weiteren Aspekt der Erfindung sind die Schwingelemente sich radial unterschiedlich weit von der Längsachse weg erstreckend, vorzugsweise schneckenförmig, ausgebildet. Auf diese Art und Weise können die Schwingelemente grundsätzlich hinsichtlich ihrer Kontur bzw. Formgebung gleich aufgebaut werden. Über ihre radiale Erstreckung kann dennoch eine Abstimmung auf unterschiedliche Resonanzfrequenzen erfolgen.

Gemäß einem weiteren Aspekt der Erfindung sind die Schwingelemente sich wenigstens paarweise zumindest im Wesentlichen, vorzugsweise genau, diametral gegenüberliegend und zumindest im Wesentlichen, vorzugsweise genau, gleich weit von der Längsachse weg erstreckend ausgebildet und die Paare von Schwingelementen sind sich radial unterschiedlich weit von der Längsachse weg erstreckend ausgebildet. Diesem Aspekt der vorliegenden Erfindung liegt die Erkenntnis zugrunde, dass falls lediglich ein Schwingelement bzw. die unmittelbar zueinander benachbarten Schwingelemente zu Schwingungen angeregt werden können, hierdurch ein Kippmoment an dieser Stelle erzeugt werden kann, welches entsprechende Belastungen gegenüber der Längsachse bewirken kann. Wird die Resonanzstruktur daher symmetrisch zur Längsachse ausgebildet, so werden gleichzeitig zwei zumindest im Wesentlichen oder sogar genau diametral zur Längsachse gegenüberliegende Schwingelemente zur Resonanzschwingung angeregt. Da dies mit gleicher Amplitude erfolgt, heben sich die Kippmomente gegenseitig im Wesentlichen oder sogar vollständig auf und entsprechende Belastungen gegenüber der Längsachse können vermieden werden. Dies kann entsprechend für wenigstens ein Paar derartiger Schwingelemente sowie für mehrere Paare derartiger Schwingelemente erreicht werden.

Gemäß einem weiteren Aspekt der Erfindung sind zumindest ein Teil, vorzugsweise alle, der Schwingelemente gegenüber der Längsachse geneigt ausgebildet. Hierdurch kann eine Schwingungskomponente erzeugt werden, welche ungleich der Längsachse sein kann.

Gemäß einem weiteren Aspekt der Erfindung weist der Resonanzabsorber mehrere Resonanzstrukturen als passive Tilger auf, welche entlang der Längsachse versetzt zueinander angeordnet sind, wobei das Anregungselement als aktiver Tilger ausgebildet ist, die Schwingelemente aller Resonanzstruktur gemeinsam entlang der Längsachse zu Schwingungen anzuregen. Hierdurch können sich die zuvor beschriebenen Wirkungen der Resonanzstrukturen ergänzen und verstärken. Alternativ kann dieselbe Wirkung durch mehrere kleinere Resonanzstrukturen in Kombination miteinander erreicht werden.

Gemäß einem weiteren Aspekt der Erfindung sind die Resonanzstrukturen gleichwirkend, vorzugsweise identisch, ausgebildet. Dies kann die Umsetzung vereinfachen, indem auf den Entwurf und auf die Konstruktion verschiedener Resonanzstrukturen, insbesondere unterschiedlicher Art, verzichtet werden kann.

Gemäß einem weiteren Aspekt der Erfindung sind die Resonanzstrukturen zumindest im Wesentlichen, vorzugsweise genau, diametral zur Längsachse gleichwirkend, vorzugsweise identisch, ausgebildet. Dies kann zum Beispiel Kippmomente wie zuvor beschrieben vermeiden helfen.

Gemäß einem weiteren Aspekt der Erfindung ist das Anregungselement ein Piezoelement, vorzugsweise ein Piezoring oder ein Piezostab, welches zumindest im Wesentlichen, vorzugsweise genau, senkrecht zur Ausrichtung der Schwingelemente wirkend ausgebildet ist. Hierdurch können die Eigenschaften piezoelektrisch wirkender Antriebselemente bzw. Anregungselemente zur Umsetzung der Erfindung genutzt werden.

Die vorliegende Erfindung betrifft auch eine schwingungsfähige Vorrichtung, vorzugsweise ein Kraftfahrzeug, besonders vorzugsweise ein elektrisches Kraftfahrzeug, mit wenigstens einem Resonanzabsorber wie zuvor beschrieben. Auf diese Art und Weise können die Eigenschaften und Vorteile eines erfindungsgemäßen Resonanzabsorbers bei einer schwingungsfähigen Vorrichtung genutzt werden, um dort Schwingungen zu dämpfen. Dies kann insbesondere bei Kraftfahrzeugen und insbesondere bei elektrischen Kraftfahrzeugen insbesondere zur Vermeidung von Geräuschen im Fahrgastraum genutzt werden.

Gemäß einem Aspekt der Erfindung ist das Anregungselement, vorzugsweise als Piezoelement, zwischen der Resonanzstruktur und einem Strukturbauteil der schwindungsfähigen Vorrichtung vorgespannt angeordnet. Mit anderen Worten wird direkt über die Resonanzstruktur eine Vorspannung auf das Anregungselement aufgebracht. Dies kann, insbesondere bei der Verwendung eines Piezoelements als Anregungselement, die Wirkung des Anregungselements entlang der Längsachse in beiden Richtungen begünstigen.

Vorzugsweise kann hierzu durch eine zentrale Öffnung innerhalb des Resonanzabsorbers ein Vorspann- bzw. Verbindungselement wie beispielsweise eine Schraube oder ein Niet geführt werden. Dieses Vorspann- bzw. Verbindungselement kann eine Vorspannkraft auf den Resonanzabsorber erzeugen, welcher sich hierdurch elastisch verformen und dabei die Vorspannung auf das Piezoelement übertragen kann. Nach einer bestimmten Auslenkung und damit bei einer definierten Vorspannkraft kann sich der Resonanzabsorber an dem Strukturbauteil direkt oder indirekt anlegen, sodass eine über die benötigte Vorspannkraft des Piezoelements hinausgehende Verbindungskraft des Resonanzabsorbers an dem zu beruhigenden Strukturbauteil und nicht auf dem Piezoelement lastet. Somit kann eine Beschädigung des Piezoelements ausgeschlossen, eine definierte Vorspannkraft sichergestellt und die Anzahl der Komponenten des Resonanzabsorbers minimiert werden.

Mehrere Ausführungsbeispiele und weitere Vorteile der Erfindung werden nachstehend im Zusammenhang mit den folgenden Figuren erläutert. Darin zeigt:
- Figur 1: eine perspektivische schematische Schnittdarstellung eines erfindungsgemäßen Resonanzabsorbers gemäß eines ersten Ausführungsbeispiels;
- Figur 2: ein Simulationsdiagramm der Frequenz der Schwingungen über die Modusnummer (links) sowie zwei Draufsichten auf den Resonanzabsorber der Figur 1 mit zwei unterschiedlichen Schwingungsformen (rechts oben, rechts unten) des Messdiagramms;
- Figur 3: eine perspektivische schematische Schnittdarstellung eines erfindungsgemäßen Resonanzabsorbers gemäß eines zweiten Ausführungsbeispiels;
- Figur 4: eine schematische Seitenansicht der Figur 3; und
- Figuren 5-8: verschiedene Detailansichten der Resonanzstruktur des Resonanzabsorbers im Querschnitt.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

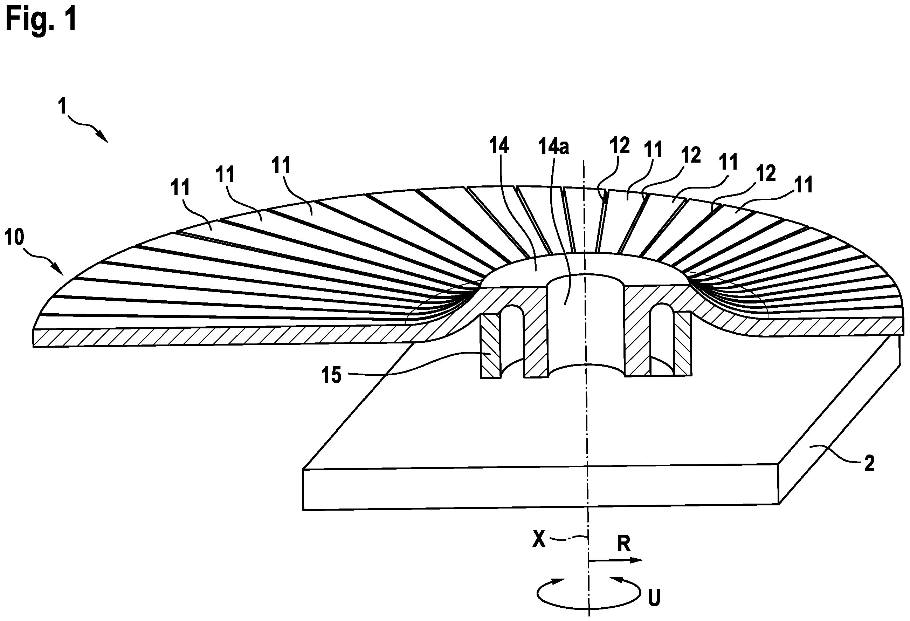

Figur 1 zeigt eine perspektivische schematische Schnittdarstellung eines erfindungsgemäßen Resonanzabsorbers 1 gemäß eines ersten Ausführungsbeispiels.

Der Resonanzabsorber 1 weist eine Resonanzstruktur 10 als passiven Tilger 10 auf. Die Resonanzstruktur 10 weist eine Vielzahl von Schwingelementen 11 auf, welche sich radial von der Längsachse X unterschiedlich weit weg erstrecken und in der Umfangsrichtung U durch Abstände 12 jeweils zueinander beabstandet sind. Die Schwingelemente 11 weisen jeweils einen rechteckigen Querschnitt auf, welcher entlang der Längsachse X die geringere Erstreckung aufweist. Die Schwingelemente 11 bilden in ihrer Gesamtheit eine schneckenförmige Struktur in der Umfangsrichtung U um die Längsachse X herum.

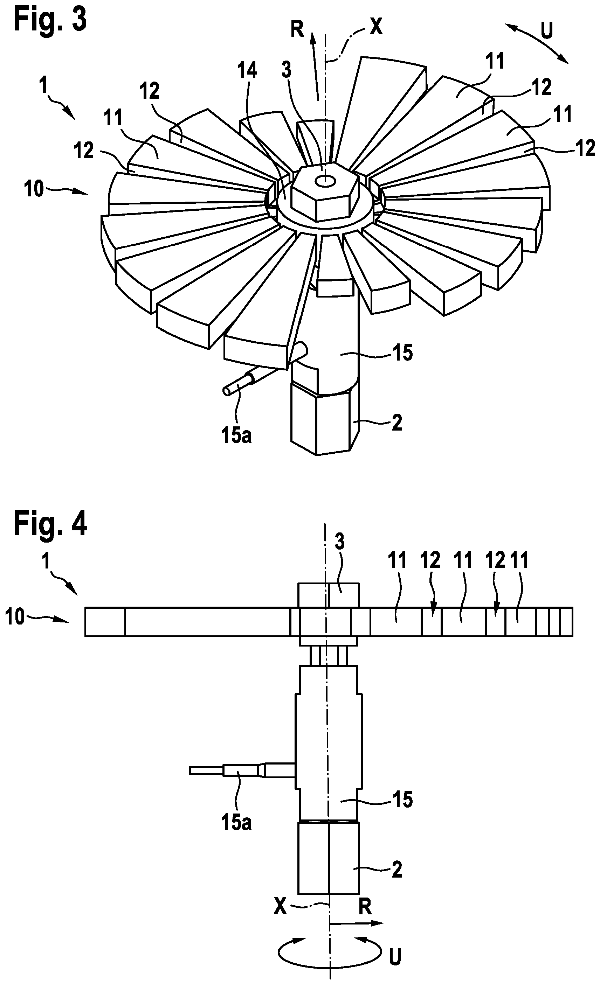

Die Schwingelemente 11 sind einstückig bzw. integral mit einem zentralen Befestigungselement 14 ausgebildet, welches sich ringförmig um die Längsachse X herum erstreckt und mittig eine zentrale Befestigungsbohrung 14a als Durchgangsöffnung entlang der Längsachse X aufweist. Durch die zentrale Durchgangsbohrung 14a hindurch entlang der Längsachse X von oben kann eine Schraube 3, vergleiche Figuren 3 und 4, geführt werden, um die Resonanzstruktur 10 auf einem Strukturbauteil 2 einer schwingungsfähigen Vorrichtung (nicht weiter dargestellt) feststehend zu befestigen.

Gemäß dem ersten Ausführungsbeispiel der Figur 1 ist entlang der Längsrichtung X ein Anregungselement 15 als aktiver Tilger 15 in Form eines Piezoelements 15, als Piezoring 15 ausgebildet, zwischen dem radial äußeren Rand des zentralen Befestigungselements 14 und dem Strukturoberteil 2 angeordnet. Der Piezoring 15 ist beispielsweise stoffschlüssig zum Beispiel durch Kleben an dem zentralen Befestigungselement 14 befestigt und gehört somit zum Resonanzabsorber 1. Alternativ kann der Piezoring 15 auch lose an dem zentralen Befestigungselement 14 angeordnet und durch die Montage des Resonanzabsorbers 1 auf dem Strukturbauteil 2 gehalten werden. In jedem Fall durch das Anziehen der Schraube 3 ein entlang der Längsachse X nach unten über das zentrale Befestigungselement 14 hinausragender Piezoring 15 bei der Montage auf dem Strukturbauteil 2 vorgespannt werden. Dabei tritt eine elastische Verformung des Befestigungselements 14 auf, bis das Befestigungselement 14 direkt oder indirekt auf derselben Oberfläche des Strukturbauteils 2 zur Anlage kommt, welche auch die Anlagefläche des Piezorings 15bildet. Dieses starre Strukturbauteil 2 kann das zu beruhigende Strukturbauteil 2 darstellen oder mit diesem wiederum, vorzugsweise starr, verbunden sein.

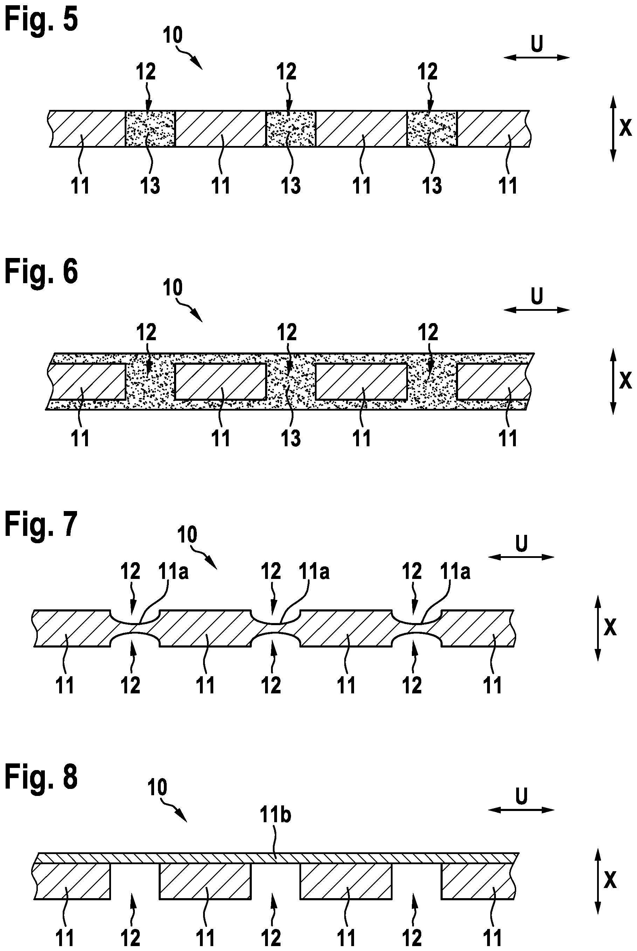

Die Abstände 12 zwischen den unmittelbar benachbarten Schwingelementen 11 können jeweils mit einem elastischen Material 13 in Form von Gummi 13 als elastomeres Material 13 gefüllt sein, siehe Figur 5. Alternativ kann das Gummi 13 zusätzlich die Schwingelemente 11 umschließen und hierdurch vor äußeren Einflüssen schützen, siehe Figur 6. Alternativ können die Schwingelemente 11 einstückig bzw. integral ausgebildet sein und im Bereich der Abstände 12 jeweils eine Materialschwächung 11a entlang der Längsachse X aufweisen, siehe Figur 7. Alternativ können die Schwingelemente 11 auch mittels eines in der Umfangsrichtung U durchgängigen Verbindungselements 11b verbunden sein, siehe Figur 8.

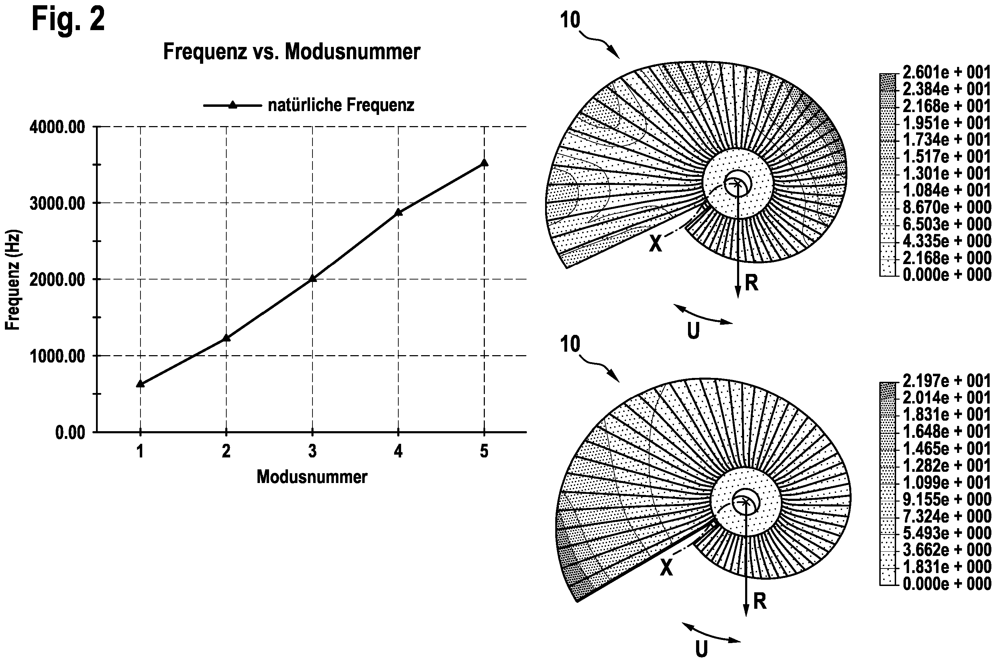

In jedem Fall kann hierdurch eine schwingungsübertragende Kopplung zwischen den Schwingelementen 11 untereinander geschaffen werden, sodass sich die Resonanzschwingungen eines Schwenkelements 11 auf die unmittelbar benachbarten Schwingelemente 11 übertragen können. Hierdurch kann eine breitbandigere Erzeugung von Resonanzschwingungen als bei bekannten Resonanzabsorbern 1 erreicht werden, wie beispielhaft in den Ansichten der Figur 2 dargestellt.

Figur 3 zeigt eine perspektivische schematische Schnittdarstellung eines erfindungsgemäßen Resonanzabsorbers 1 gemäß eines zweiten Ausführungsbeispiels. Figur 4 zeigt eine schematische Seitenansicht der Figur 3.

In diesem Fall ist die Resonanzstruktur 10 punktsymmetrisch zur Längsachse X ausgebildet, sodass sich zwei halbkreisförmige schneckenförmige Anordnungen der Schwingelemente 11 ausbilden. Auf diese Art und Weise können Kippmomente gegenüber der Längsachse X vermieden werden.

Ferner ist das Piezoelement 15 als Piezostab 15 ausgebildet und entlang der Längsrichtung X zwischen einem stabförmigen Strukturbauteil 2 und der Resonanzstruktur 10 wie zuvor beschrieben angeordnet. Der Piezostab 15 kann über einen Anschluss 15a elektrisch versorgt und betrieben werden.

### Bezugszeichenliste (Teil der Beschreibung)

- R: radiale Richtung
- U: Umfangsrichtung
- X: Längsachse

- 1: Resonanzabsorber
- 10: Resonanzstruktur; passiver Tilger
- 11: Schwingelemente bzw. Saiten der Resonanzstruktur 10
- 11a: Materialschwächungen der Schwingelemente 11
- 11b: Verbindungselemente der Schwingelemente 11
- 12: Abstände unmittelbar benachbarter Schwingelemente 11
- 13: elastisches bzw. elastomeres oder thermoplastisches Material bzw. Gummi in Abständen 12
- 14: zentrales Befestigungselement
- 14a: zentrale Befestigungsbohrung des zentralen Befestigungselements 14
- 15: Anregungselement; aktiver Tilger; Piezoelement; Piezoring; Piezostab
- 15a: Anschluss des Anregungselements 15

- 2: Strukturbauteil

- 3: Schraube

## Patentansprüche

1. Resonanzabsorber (1)
mit wenigstens einer Resonanzstruktur (10) als passivem Tilger (10) mit einer Mehrzahl von Schwingelementen (11), welche um eine gemeinsame Längsachse (X) herum sich zumindest abschnittsweise, vorzugsweise im Wesentlichen, besonders vorzugsweise vollständig, radial erstreckend ausgebildet sind,
wobei die Schwingelemente (11) in der Umfangsrichtung (U) der Längsachse (X) zumindest abschnittsweise durch Abstände (12) zueinander beabstandet sind,
**gekennzeichnet durch**
wenigstens ein Anregungselement (15) als aktivem Tilger (15), welches ausgebildet ist, die Schwingelemente (11) der Resonanzstruktur (10) gemeinsam entlang der Längsachse (X) zu Schwingungen anzuregen,
wobei zumindest mehrere in der Umfangsrichtung (U) unmittelbar benachbarte Schwingelemente (11), vorzugsweise alle Schwingelemente (11), über den jeweiligen Abstand (12) hinweg elastisch miteinander schwingungsübertragend gekoppelt sind.

2. Resonanzabsorber (1) nach Anspruch 1, **dadurch gekennzeichnet, dass** der jeweilige Abstand (12) zwischen den Schwingelementen (11) zumindest abschnittsweise, vorzugsweise vollständig, mit einem elastischen Material (13) gefüllt ist, welches die unmittelbar benachbarten Schwingelemente (11) schwingungsübertragend miteinander koppelt.

3. Resonanzabsorber (1) nach Anspruch 2, **dadurch gekennzeichnet, dass** das elastische Material (13) ein elastomeres Material (13), vorzugsweise Gummi (13), oder ein thermoplastisches Material (13) aufweist, vorzugsweise ist.

4. Resonanzabsorber (1) nach einem der vorangehenden Ansprüche, **dadurch gekennzeichnet, dass**
der jeweilige Abstand (12) zwischen den Schwingelementen (11) abschnittsweise mit einer dünneren Materialstärke des Materials der Schwingelemente (11) als Materialschwächung (11a) gefüllt ist, welche die unmittelbar benachbarten Schwingelemente (11) schwingungsübertragend miteinander koppelt.

5. Resonanzabsorber (1) nach einem der vorangehenden Ansprüche, **dadurch gekennzeichnet, dass**
die unmittelbar benachbarten Schwingelemente (11) mittels wenigstens eines Verbindungselements (11b) schwingungsübertragend miteinander gekoppelt sind.

6. Resonanzabsorber (1) nach einem der vorangehenden Ansprüche, **dadurch gekennzeichnet, dass**
die Schwingelemente (11), vorzugsweise samt Materialschwächung (11a), ein metallisches Material oder ein duroplastisches Material aufweist, vorzugsweise ist.

7. Resonanzabsorber (1) nach einem der vorangehenden Ansprüche, **dadurch gekennzeichnet, dass**
die Schwingelemente (11) sich radial unterschiedlich weit von der Längsachse (X) weg erstreckend, vorzugsweise schneckenförmig, ausgebildet sind.

8. Resonanzabsorber (1) nach einem der Ansprüche 1 bis 6, **dadurch gekennzeichnet, dass**
die Schwingelemente (11) sich wenigstens paarweise zumindest im Wesentlichen, vorzugsweise genau, diametral gegenüberliegend und zumindest im Wesentlichen, vorzugsweise genau, gleich weit von der Längsachse (X) weg erstreckend ausgebildet sind und
die Paare von Schwingelementen (11) sich radial unterschiedlich weit von der Längsachse (X) weg erstreckend ausgebildet sind.

9. Resonanzabsorber (1) nach einem der vorangehenden Ansprüche, **dadurch gekennzeichnet, dass**
zumindest ein Teil, vorzugsweise alle, der Schwingelemente (11) gegenüber der Längsachse (X) geneigt ausgebildet sind.

10. Resonanzabsorber (1) nach einem der vorangehenden Ansprüche, **gekennzeichnet durch**
mehrere Resonanzstrukturen (10) als passive Tilger (10), welche entlang der Längsachse (X) versetzt zueinander angeordnet sind,
wobei das Anregungselement (15) als aktiver Tilger (15) ausgebildet ist, die Schwingelemente (11) aller Resonanzstruktur (10) gemeinsam entlang der Längsachse (X) zu Schwingungen anzuregen.

11. Resonanzabsorber (1) nach Anspruch 10, **dadurch gekennzeichnet, dass** die Resonanzstrukturen (10) gleichwirkend, vorzugsweise identisch, ausgebildet sind.

12. Resonanzabsorber (1) nach Anspruch 10, **dadurch gekennzeichnet, dass** die Resonanzstrukturen (10) zumindest im Wesentlichen, vorzugsweise genau, diametral zur Längsachse (X) gleichwirkend, vorzugsweise identisch, ausgebildet sind.

13. Resonanzabsorber (1) nach einem der vorangehenden Ansprüche, **dadurch gekennzeichnet, dass**
das Anregungselement (15) ein Piezoelement (15), vorzugsweise ein Piezoring (15) oder ein Piezostab (15), ist, welches zumindest im Wesentlichen, vorzugsweise genau, senkrecht zur Ausrichtung der Schwingelemente (11) wirkend ausgebildet ist.

14. Schwingungsfähige Vorrichtung, vorzugsweise Kraftfahrzeug, besonders vorzugsweise elektrisches Kraftfahrzeug, mit wenigstens einem Resonanzabsorber (1) nach einem der vorangehenden Ansprüche.

15. Schwingungsfähige Vorrichtung nach Anspruch 14, **dadurch gekennzeichnet, dass**
das Anregungselement (15), vorzugsweise als Piezoelement (15), zwischen der Resonanzstruktur (10) und einem Strukturbauteil (2) der schwindungsfähigen Vorrichtung vorgespannt angeordnet ist.

## Claims

1. Resonance absorber (1)
having at least one resonance structure (10) as a passive absorber (10) having a plurality of vibrating elements (11) which are designed to radially extend, at least in sections, preferably substantially, particularly preferably completely, around a common longitudinal axis (X),
wherein the vibrating elements (11) are spaced apart from one another in the circumferential direction (U) of the longitudinal axis (X), at least in sections, by spacings (12),
**characterized by**
at least one excitation element (15) as an active absorber (15) which is designed to excite the vibrating elements (11) of the resonance structure (10) to vibrate together along the longitudinal axis (X),
wherein at least a plurality of vibrating elements (11), preferably all of the vibrating elements (11), immediately adjacent in the circumferential direction (U) are elastically coupled to one another in a vibration-transmitting manner over the respective spacing (12).

2. Resonance absorber (1) according to Claim 1, **characterized in that** the respective spacing (12) between the vibrating elements (11) is filled, at least in sections, preferably completely, with an elastic material (13) which couples the immediately adjacent vibrating elements (11) to one another in a vibration-transmitting manner.

3. Resonance absorber (1) according to Claim 2, **characterized in that** the elastic material (13) comprises, preferably is, an elastomeric material (13), preferably rubber (13), or a thermoplastic material (13).

4. Resonance absorber (1) according to one of the preceding claims,
**characterized in that**
the respective spacing (12) between the vibrating elements (11) is filled, in sections, with a thinner material thickness of the material of the vibrating elements (11) as a material weakening (11a) which couples the immediately adjacent vibrating elements (11) to one another in a vibration-transmitting manner.

5. Resonance absorber (1) according to one of the preceding claims,
**characterized in that**
the immediately adjacent vibrating elements (11) are coupled to one another in a vibration-transmitting manner by means of at least one connecting element (11b).

6. Resonance absorber (1) according to one of the preceding claims,
**characterized in that**
the vibrating elements (11), preferably including the material weakening (11a), comprise, preferably are, a metal material or a thermoset material.

7. Resonance absorber (1) according to one of the preceding claims,
**characterized in that**
the vibrating elements (11) are designed to extend radially away from the longitudinal axis (X) to varying extents, preferably helically.

8. Resonance absorber (1) according to one of Claims 1 to 6, **characterized in that** the vibrating elements (11) are designed to extend, at least in pairs, at least substantially, preferably precisely, diametrically opposite and at least substantially, preferably precisely, equally far away from the longitudinal axis (X) and
the pairs of vibrating elements (11) are designed to extend radially away from the longitudinal axis (X) to varying extents.

9. Resonance absorber (1) according to one of the preceding claims,
**characterized in that**
at least some, preferably all, of the vibrating elements (11) are designed at an angle to the longitudinal axis (X).

10. Resonance absorber (1) according to one of the preceding claims,
**characterized by**
a plurality of resonance structures (10) as passive absorbers (10) which are arranged along the longitudinal axis (X) offset with respect to one another, wherein the excitation element (15) as an active absorber (15) is designed to excite the vibrating elements (11) of all the resonance structures (10) to vibrate together along the longitudinal axis (X).

11. Resonance absorber (1) according to Claim 10, **characterized in that** the resonance structures (10) are designed to act in a similar manner, preferably identically.

12. Resonance absorber (1) according to Claim 10, **characterized in that** the resonance structures (10) are designed to act in a similar manner, preferably identically, at least substantially, preferably precisely, diametrically to the longitudinal axis (X).

13. Resonance absorber (1) according to one of the preceding claims,
**characterized in that**
the excitation element (15) is a piezoelement (15), preferably a piezoring (15) or a piezorod (15), which is designed to act at least substantially, preferably precisely, perpendicular to the orientation of the vibrating elements (11).

14. Vibration-capable device, preferably motor vehicle, particularly preferably electric motor vehicle, having at least one resonance absorber (1) according to one of the preceding claims.

15. Vibration-capable device according to Claim 14, **characterized in that** the excitation element (15), preferably as a piezoelement (15), is arranged prestressed between the resonance structure (10) and a structural component (2) of the vibration-capable device.

## Revendications

1. Dispositif d'absorption par résonance (1)
comprenant au moins une structure de résonance (10) en tant qu'amortisseur passif (10) pourvu d'une pluralité d'éléments vibrants (11) qui sont réalisés en s'étendant au moins par endroits, de préférence substantiellement, en particulier de préférence complètement, radialement autour d'un axe longitudinal (X) commun,
dans lequel les éléments vibrants (11) sont espacés les uns par rapport aux autres au moins par endroits par des intervalles (12) dans la direction circonférentielle (U) de l'axe longitudinal (X),
**caractérisé par**
au moins un élément d'excitation (15) en tant qu'amortisseur actif (15) qui est réalisé pour faire vibrer les éléments vibrants (11) de la structure de résonance (10) ensemble le long de l'axe longitudinal (X),
dans lequel au moins plusieurs éléments vibrants (11) directement voisins dans la direction circonférentielle (U), de préférence tous les éléments vibrants (11), sont de manière élastique accouplés les uns aux autres en transmission de vibration au-delà de l'intervalle (12) respectif.

2. Dispositif d'absorption par résonance (1) selon la revendication 1, **caractérisé en ce que** l'intervalle (12) respectif entre les éléments vibrants (11) est comblé au moins par endroits, de préférence complètement, par un matériau élastique (13) qui accouple les uns aux autres les éléments vibrants (11) directement en transmission de vibration.

3. Dispositif d'absorption par résonance (1) selon la revendication 2, **caractérisé en ce que** le matériau élastique (13) présente, de préférence est, un matériau élastomère (13), de préférence du caoutchouc (13) ou un matériau thermoplastique (13).

4. Dispositif d'absorption par résonance (1) selon l'une quelconque des revendications précédentes, **caractérisé en ce que**
l'intervalle (12) respectif entre les éléments vibrants (11) est comblé par endroits par une épaisseur de matériau plus mince du matériau des éléments vibrants (11) que l'affaiblissement de matériau (11a) qui accouple les uns aux autres les éléments vibrants (11) directement voisins en transmission de vibration.

5. Dispositif d'absorption par résonance (1) selon l'une quelconque des revendications précédentes, **caractérisé en ce que**
les éléments vibrants (11) directement voisins sont accouplés les uns aux autres en transmission de vibration au moyen d'au moins un élément de liaison (11b).

6. Dispositif d'absorption par résonance (1) selon l'une quelconque des revendications précédentes, **caractérisé en ce que**
les éléments vibrants (11), de préférence y compris l'affaiblissement de matériau (11a), présentent, de préférence sont, un matériau métallique ou un matériau thermodurcissable.

7. Dispositif d'absorption par résonance (1) selon l'une quelconque des revendications précédentes, **caractérisé en ce que**
les éléments vibrants (11) sont réalisés en s'écartant radialement sur différentes distances de l'axe longitudinal (X), de préférence de manière hélicoïdale.

8. Dispositif d'absorption par résonance (1) selon l'une quelconque des revendications 1 à 6, **caractérisé en ce que**
les éléments vibrants (11) sont réalisés en s'écartant au moins par paires au moins substantiellement, de préférence exactement, de manière diamétralement opposée et au moins substantiellement, de préférence exactement, sur la même distance de l'axe longitudinal (X), et
les paires d'éléments vibrants (11) sont réalisées en s'écartant radialement sur différentes distances de l'axe longitudinal (X).

9. Dispositif d'absorption par résonance (1) selon l'une quelconque des revendications précédentes, **caractérisé en ce que**
au moins une partie, de préférence tous les éléments vibrants (11) sont réalisés de manière inclinée par rapport à l'axe longitudinal (X).

10. Dispositif d'absorption par résonance (1) selon l'une quelconque des revendications précédentes, **caractérisé par**
plusieurs structures de résonance (10) en tant qu'amortisseurs passifs (10) qui sont disposés de manière décalée les uns par rapport aux autres le long de l'axe longitudinal (X),
dans lequel l'élément d'excitation (15) est réalisé en tant qu'amortisseur actif (15) pour faire vibrer les éléments vibrants (11) de toutes les structures de résonance (10) ensemble le long de l'axe longitudinal (X).

11. Dispositif d'absorption par résonance (1) selon la revendication 10, **caractérisé en ce que** les structures de résonance (10) sont réalisées pour produire le même effet, de préférence de manière identique.

12. Dispositif d'absorption par résonance (1) selon la revendication 10, **caractérisé en ce que** les structures de résonance (10) sont réalisées pour produire le même effet, de préférence de manière identique, au moins substantiellement, de préférence exactement, diamétralement par rapport à l'axe longitudinal (X).

13. Dispositif d'absorption par résonance (1) selon l'une quelconque des revendications précédentes, **caractérisé en ce que**
l'élément d'excitation (15) est un élément piézoélectrique (15), de préférence une bague piézoélectrique (15) ou une tige piézoélectrique (15), qui est réalisé pour agir au moins substantiellement, de préférence exactement, perpendiculairement à l'alignement des éléments vibrants (11).

14. Dispositif susceptible de vibrer, de préférence véhicule automobile, de manière particulièrement préférée véhicule automobile électrique, comprenant au moins un dispositif d'absorption par résonance (1) selon l'une quelconque des revendications précédentes.

15. Dispositif susceptible de vibrer selon la revendication 14, **caractérisé en ce que**
l'élément d'excitation (15), de préférence sous forme d'élément piézoélectrique (15), est disposé en amont entre la structure de résonance (10) et un composant structurel (2) du dispositif susceptible de vibrer.
